Europäisches Patentamt

European Patent Office

Office européen des brevets

(19)

(11) EP 0 607 588 B1

(12) EUROPEAN PATENT SPECIFICATION

(45) Date of publication and mention
of the grant of the patent:
**03.09.1997 Bulletin 1997/36**

(51) Int Cl.6: **E05F 11/48**

(21) Application number: **93120458.0**

(22) Date of filing: **17.12.1993**

(54) **Vehicle cable-operated window regulating device**

Mit einem Kabel betätigte Fahrzeugfensterhebervorrichtung

Dispositif lève-glace de véhicule actionné par câble

(84) Designated Contracting States:
**DE ES FR GB IT NL SE**

(30) Priority: **22.01.1993 IT TO930034**

(43) Date of publication of application:
**27.07.1994 Bulletin 1994/30**

(73) Proprietor: **ROLTRA MORSE S.p.A.**
**I-10090 Cascine Vica - Rivoli (IT)**

(72) Inventors:
• **Bergesio, Giuseppe**
  **I-12042 Bra (IT)**
• **Fogarollo, Pier Paolo**
  **I-16043 Chiavari (IT)**

(74) Representative: **Jorio, Paolo, Dr. Ing. et al**
**Studio Torta S.r.l.,**
**Via Viotti, 9**
**10121 Torino (IT)**

(56) References cited:
**DE-A- 3 214 478        DE-A- 3 829 680**
**FR-A- 2 441 711        US-A- 4 442 632**

## Description

The present invention relates to a vehicle cable-operated window regulating device.

In particular, the present invention relates to a window regulating device of the type comprising a guide; a slide running along the guide, connected to a movable window, and movable with the window along the guide; and a slide drive device; the drive device comprising a cable connected to the slide and having two end portions, a movable support for the two end portions, and an actuating unit connected to the cable for moving it axially along an annular path.

A drawback of known window regulating devices of the aforementioned type is that, after a certain number of operating cycles, the cable tends to slacken, thus resulting in serious vibration and possible withdrawal of the cable from the actuating unit.

To overcome the above drawback, window regulating devices of the aforementioned type are produced wherein a first end portion of the cable is connected in sliding manner to the support via the interposition of a calibrated spring for exerting on the first end portion a substantially constant thrust in the direction of the second end portion which is fixed to the support.

Though they do provide for taking up gradual slack on the cable, springs such as the one described above fail to eliminate the noise problem typically associated with such devices. Indeed, the variable forces exerted on the spring during operation of the device are such as to induce oscillation of the spring, which in turn results in varying tension of the cable and, hence, in a high degree of operating noise.

This problem has been solved to some extent by providing the spring and the first end portion of the cable with a one-way, step-operated lock device for maintaining oscillation of the spring and, hence, the variation in the tension of the cable, within a relatively small range.

The lock device, such as the type described and illustrated in German Patent n. 38.29.680, normally comprises a serrated rack integral with the support; and at least one catch element fitted, together with the spring, to the first end portion of the cable, and which, by virtue of the spring, gradually and positively engages the teeth on the rack to maintain the length of said annular path substantially constant, and ensure the desired tension of the cable varies by at most a relatively small given amount depending on the tooth spacing of the rack.

Despite successfully taking up the slack on the cable as it occurs, and maintaining the tension of the cable substantially constant, perfected window regulating devices of the aforementioned type fail to fully eliminate cable vibration, and consequently operating noise, caused by small, continual fluctuations in the tension of the cable within the range defined by the tooth spacing of the rack.

It is an object of the present invention to provide a perfected window regulating device of the aforementioned type, designed to overcome the aforementioned drawback.

This object is achieved by a vehicle window regulating device as claimed in Claim 1.

A number of non-limiting embodiments of the present invention will be described by way of example with reference to the accompanying drawings, in which:

Figure 1 shows a schematic side view of a preferred embodiment of the window regulating device according to the present invention;

Figure 2 shows a larger-scale longitudinal section of a detail in Figure 1;

Figure 3 shows a larger-scale longitudinal section of a variation of the Figure 2 detail.

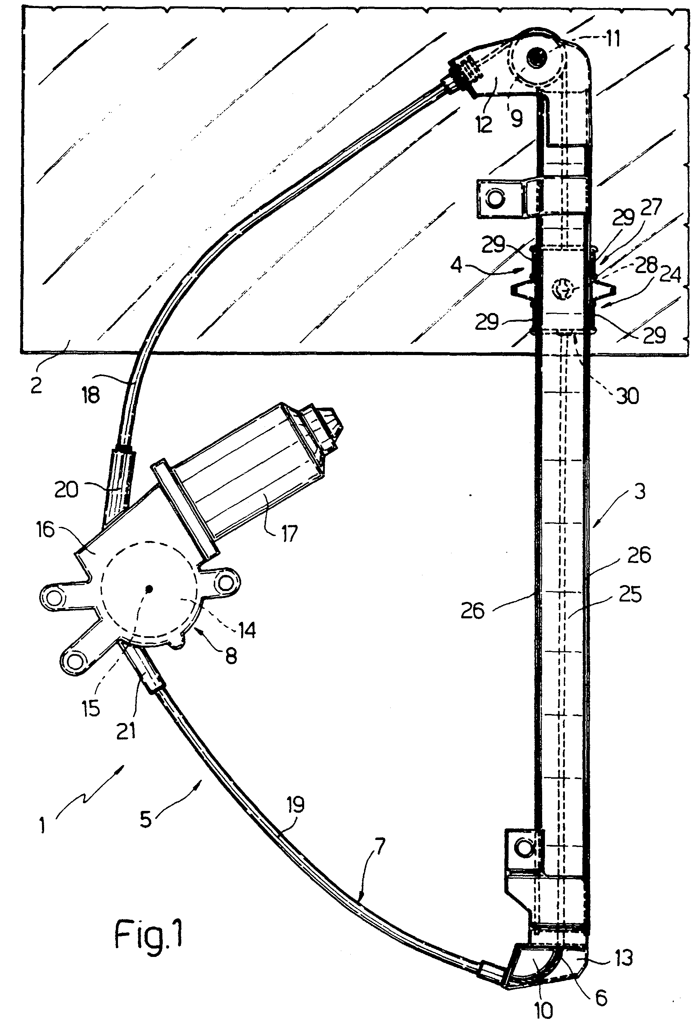

Number 1 in Figure 1 indicates a window regulating device for two-way regulation of a movable window 2 of a vehicle (not shown).

Device 1 comprises a substantially vertical guide 3; and a slide 4 connected in sliding manner to guide 3 and supporting window 2. Slide 4 is movable both ways along guide 3 by a drive device 5 comprising a cable 6 connected to slide 4 and extending along an annular path 7 through slide 4; and an actuating unit 8 connected to cable 6 for moving it along path 7. Cable 6 is looped about two transmission elements 9, 10, of which the first is a pulley rotating about an axis 11, and the second a fixed curved shoe. Elements 9, 10 are fitted to respective supporting plates 12, 13 (integral, in use, with the vehicle) in turn fitted integral with the opposite axial ends of guide 3. Cable 6 is also looped about a drive drum 14 forming part of unit 8 and having an axis 15 substantially perpendicular to the Figure 1 plane.

Drum 14 is mounted for rotation on a supporting plate 16 (integral, in use, with the vehicle) and is connected by a known drive (not shown in Figure 1) to a motor 17 also fitted to plate 16 and forming part of unit 8. According to a variation not shown, in place of motor 17, actuating unit 8 comprises, in known manner, a hand-operated handle (not shown).

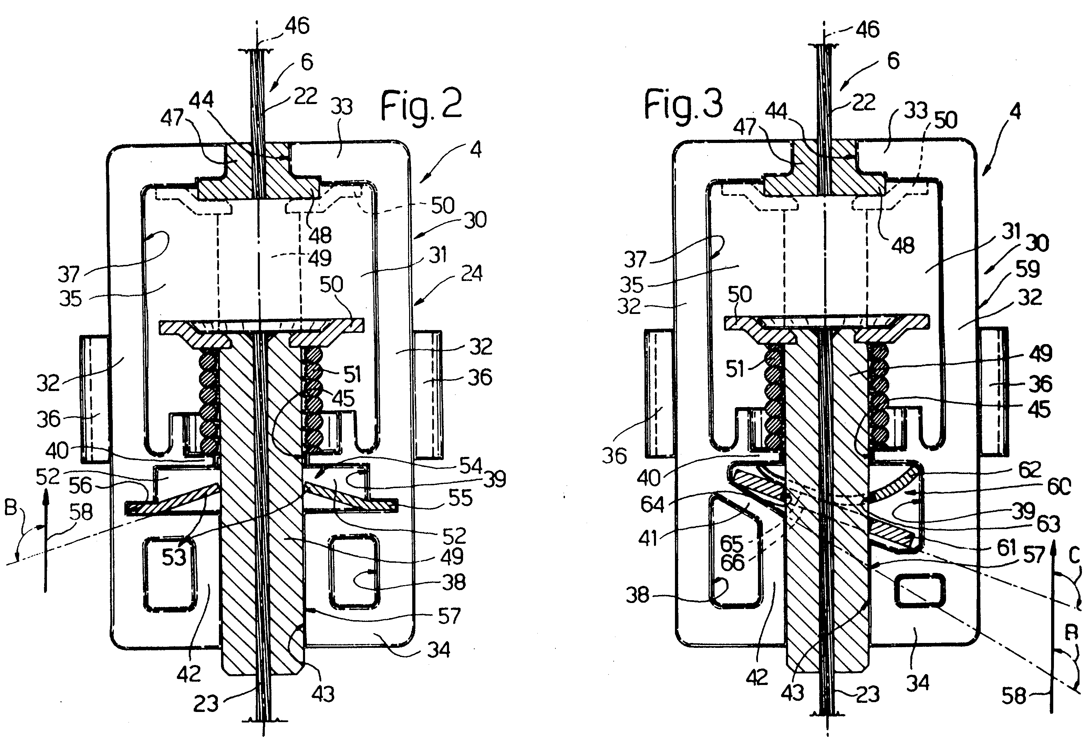

Between drum 14 and elements 9, 10, cable 6 runs inside respective flexible sheath portions 18, 19, and inside respective rigid, cylindrical, tubular bodies 20, 21, each extending on an extension of a respective sheath portion 18, 19, and adjacent and tangent to drum 14. Cable 6 extends continuously about drum 14 and along sheath portions 18, 19 and tubular bodies 20, 21, and presents two opposite end portions 22, 23 (Figure 2) connected to each other via the interposition of a tensioning unit 24 fitted to slide 4.

As shown in Figure 1, guide 3 presents a substantially C-shaped section, and comprises a central core 25 and two lateral wings 26 perpendicular to core 25; while slide 4 comprises a substantially rectangular outer plate 27 having a central pin 28 for connecting it in known manner to window 2, and the longer lateral edges of which present brackets 29 for connecting it in sliding manner to wings 26 of guide 3.

Slide 4 is fitted integral with tensioning unit 24, which comprises a cup-shaped body 30 fitted between wings 26 and snapped on to plate 27 which forms a cover for closing the open end of body 30.

As shown in Figure 2, body 30 is substantially in the form of a rectangular prism shorter in height than wings 26, and comprises a substantially rectangular bottom wall 31 parallel to plate 27; a first pair of lateral walls 32 parallel to, and substantially contacting the inner surface of, wings 26; and a second pair of lateral walls 33, 34 perpendicular to walls 32 and connected integral with walls 31, 32 so as to define, with walls 31, 32 and plate 27, a chamber 35. From each of walls 32, there projects laterally outwards an appendix 36 for snapping body 30 on to plate 27.

Chamber 35 is divided into two end portions 37, 38 and an intermediate portion 39 by two partitions 40, 41 forming an integral part of body 30 and parallel to walls 33, 34; and partition 41 and adjacent wall 34 are connected to each other, inside portion 38 of chamber 35, by a tubular body 42 having a cylindrical axial hole 43 extending through wall 34 and partition 41. Hole 43 is coaxial with cylindrical through holes 44, 45 formed through wall 33 and partition 40 and along the axis 46 of body 30 substantially parallel to the axis (not shown) of guide 3.

Tensioning unit 24 also comprises two end elements integral with end portions 22, 23 of cable 6, and respectively consisting of a plug 47 fitted through hole 44 and having a flange 48 contacting the inner surface of wall 33; and a slider 49 in turn consisting of a cylindrical sleeve fitted in sliding manner through holes 43, 45 and presenting, on its free end, a plate 50 housed inside portion 37 of chamber 35 and pushed towards plug 47 by a spring 51 coaxial with axis 46 and compressed, with a given preload, between plate 50 and partition 40.

Inside portion 39 of chamber 35, slider 49 defines two chambers 52 diametrically opposed in relation to slider 49 and each housing a respective flexible blade 53 of a lock element 54 enabling continuous one-way movement of slider 49 towards a limit position (shown by the dotted line in Figure 2) contacting plug 47, and so maintaining substantially constant the length of path 7 and, hence, the tension imparted to cable 6 by spring 51.

More specifically, and as shown in Figure 2, lock element 54 consists of a rectangular plate, the central portion of which is cut and bent to form the two blades 53, both bent towards wall 33 on the same side of element 54, with their free ends facing each other; and the peripheral portion 55 of which engages slots 56 formed on the inner surface of walls 32. Each of blades 53 - one of which may be dispensed with - presents its free end contacting the lateral surface 57 of slider 49, and forms, with the traveling direction 58 of slider 49 towards said limit position, an angle B of more than 90° and less than 180°.

In actual use, any slack on cable 6 resulting in a reduction in the compression of spring 51 is immediately compensated, as it is formed, by a corresponding expansion of spring 51 which provides for moving slider 49 in direction 58.

As slider 49 moves in direction 58, surface 57 of the slider brushes against the free ends of blades 53 which, while freely permitting movement of slider 49 in the direction of plug 47, prevent it from oscillating about each new stable position, due to pulsating forces to which slider 49 is subjected by spring 51. Indeed, any displacement of slider 49 towards wall 34 is prevented by the free ends of blades 53 bracing against surface 57. In other words, any attempt by slider 49 to move in the direction of wall 34 is prevented by blades 53 exerting a wedge type locking action on surface 57, so that said pulsating forces, by virtue of only determining displacements of slider 49 which tend to increase the tension of cable 6, are damped almost instantly, thus preventing vibration. This favourable result, which is accompanied by a relatively high degree of noisefree operation of device 1, is also assisted by the fact that blades 53, when braced against surface 57, substantially define a Belleville washer capable of also damping any oscillation of slider 49 due to the elasticity of cable 6.

The Figure 3 variation relates to a tensioning unit 59 similar to unit 24, and the component parts of which corresponding to those of unit 24 are indicated using the same numbering system.

Unit 59 differs from unit 24 in that partition 41 is positioned obliquely in relation to axis 46, and forms, with direction 58, an angle B of more than 90° and less than 180°.

Moreover, in place of lock element 54, unit 59 comprises a lock element 60 in turn comprising a washer 61 of a given thickness "S" preferably roughly equal to the diameter of cable 6; and a curved elastic element 62, in particular a leaf spring element, the opposite ends of which rest on partition 40, and the intermediate portion of which is compressed against the surface of washer 61 facing partition 40, so as to push washer 61 elastically towards partition 41. More specifically, elastic element 62 presents a lateral opening 63 engaged in sliding manner by slider 49, and is positioned contacting washer 61 and eccentrically in relation to axis 46; while washer 61 presents a central cylindrical through hole 64 fitted through with slider 49, and having a diameter "D" greater than diameter "d" of slider 49 but less than a value:

$$D' = \sin B\,(d + S/\cos B)$$

at which washer 61 would be capable of tilting, in relation to cable 6 and by virtue of the eccentric thrust of elastic element 62, by an angle equal to angle B, and so adhering to partition 41. Conversely, for a diameter "D" of less than D' but in any case greater than "d", washer 61 is positioned (Figure 3) with a peripheral point contacting a point, closest to partition 40, on the surface of partition 41, which acts as a reaction element, and with the opposite edges 65, 66 of hole 64 contacting surface 57 of slider 49, so as to form, with slider 49, an angle C smaller than angle B.

Consequently, any displacement of slider 49 in direction 58 is permitted in that it tends to reduce the value of angle C against the action of elastic element 62 and, hence, the contact pressure between edges 65, 66 and surface 57; whereas any displacement in the opposite direction to 58 - which results in washer 61 being subjected, by elastic element 62 on the one hand and by the reaction element consisting of partition 41 on the other, to a torque which tends to increase angle C - is prevented by edges 65 and 66 wedging against and so axially locking slider 49 in said direction.

As can be seen, elastic element 62 of lock element 60 provides solely for maintaining washer 61 tilted in relation to slider 49, the one-way lock function being performed entirely by washer 61.

## Claims

1. A vehicle window regulating device (1) comprising a guide (3); a slide (4) running along the guide (3), connected to a movable window (2), and movable with the window (2) along the guide (3); and a device (5) for driving the slide (4); the drive device (5) comprising a cable (6) connected to the slide (4) and presenting a first (23) and second (22) end portion; a support (30) movable with said slide (4) for supporting the two end portions (22, 23); elastic means (51) interposed between the first end portion (23) and the support (30), for exerting on the first end portion (23) a given thrust in the direction of the second end portion (22); an actuating unit (8) connected to the cable (6) for moving it axially along an annular path (7); and one-way lock means (24) (59) interposed between the first end portion (23) and the support (30), and connected to the first end portion (23) for maintaining said thrust equal at all times to said given value, characterized by said one-way lock means (24) (59) being continuous lock means effective to exclude substantially all movement of the first end portion (23) with respect to the support (30) in a direction opposite to the direction of said thrust.

2. A device as claimed in Claim 1, characterized by the fact that said lock means (24)(59) are friction lock means (24) (59).

3. A device as claimed in Claim 1 or 2, characterized by the fact that said lock means (24)(59) comprise a slider (49) integral with the first end portion (23) and movable along the support (30) in a given direction (58) towards the second end portion (22); and a one-way lock element (54)(60) fitted in a substantially fixed position to the support (30) and mating frictionally with said slider (49); the lock element (54)(60) being designed to exert a wedge type locking action on the slider (49) for each displacement of the slider (49) away from said second end portion (22).

4. A device as claimed in any one of the foregoing Claims, characterized by the fact that the support (30) is integral with the slide (4) and movable with the slide (4) along the guide (3).

5. A device as claimed in Claim 3 or 4, characterized by the fact that the lock element (54) comprises substantially cup-shaped elastic means (53) fitted in a fixed position to the support (30) and engaged frictionally by said slider (49).

6. A device as claimed in Claim 5, characterized by the fact that the slider (49) presents a bracing surface (57) movable in contact with said cup-shaped elastic means (53) and substantially parallel to said direction (58); the cup-shaped elastic means (53) being inclined, in relation to said direction (58), towards said bracing surface (57) and towards said second end portion (22).

7. A device as claimed in any one of the foregoing Claims from 3 to 6, characterized by the fact that the slider (49) presents a bracing surface (57) movable in contact with said lock element (54) and substantially parallel to said direction (58); the lock element (54) comprising at least one flexible blade (53) having a free end contacting said bracing surface (57), and forming, with said direction (58), an angle of over 90°.

8. A device as claimed in Claim 7, characterized by the fact that said lock element (54) comprises a pair of said flexible blades (53) inclined towards each other and with their respective free ends facing each other; the slider (49) being mounted so as to slide frictionally between said two free ends.

9. A device as claimed in Claim 3 or 4, characterized by the fact that the lock element (60) is movable in relation to the support (30), and mates frictionally with said slider (49).

10. A device as claimed in Claim 9, characterized by the fact that the lock element (60) comprises plate means (61) fitted through with said slider (49) and movable, in relation to said support (30) and said slider (49), to and from a position wherein the slider (49) is locked frictionally one way in relation to the support (30).

**11.** A device as claimed in Claim 10, characterized by the fact that thrust means (62) are provided for pushing said plate means (61) into said lock position.

**12.** A device as claimed in Claim 10 or 11, characterized by the fact that thrust means (62) and reaction means (41) are provided for torquing said plate means (61) into said lock position.

**13.** A device as claimed in Claim 10, 11 or 12, characterized by the fact that, in said lock position, said plate means (61) are positioned obliquely in relation to said slider (49).

**14.** A device as claimed in Claim 13, characterized by the fact that said plate means (61) present a through hole (64) engaged by said slider (49) which presents a bracing surface (57) movable through said hole (64) and substantially parallel to said direction (58); said hole (64) presenting a section larger than that of said slider (49), and end edges (65, 66) frictionally wedging against said bracing surface (57) when said plate means (61) are in said oblique position.

**15.** A device as claimed in any one of the foregoing Claims from 10 to 14, characterized by the fact that said plate means (61) comprise a washer (61) fitted through with said slider (49).

**Patentansprüche**

**1.** Fahrzeug-Fensterhebervorrichtung mit einer Führung (3), einem Schlitten (4), der entlang der Führung (3) läuft, mit einem bewegbaren Fenster (2) verbunden ist und zusammen mit dem Fenster (2) entlang der Führung (3) bewegbar ist, und einer Vorrichtung (5) zum Antreiben des Schlittens (4), wobei die Antriebsvorrichtung (5) ein Seil (6), das mit dem Schlitten (4) verbunden ist und das einen ersten (23) und einen zweiten (22) Endteil aufweist, eine zusammen mit dem Schlitten (4) bewegbare Stütze (30) zum Stützen der beiden Endteile (22, 23), eine Federeinrichtung (51), die zwischen den ersten Endteil (23) und die Stütze (30) gelegt ist, um einen gegebenen Schub in der Richtung des zweiten Endteils (22) auf den ersten Endteil (23) auszuüben, eine Betätigungseinheit (8), die mit dem Seil (6) verbunden ist, um es axial entlang eines ringförmigen Weges (7) zu bewegen, und eine Einweg-Verriegelungseinrichtung (24) (59) aufweist, die zwischen den ersten Endteil (23) und die Stütze (30) gelegt ist und die mit dem ersten Endteil (23) verbunden ist, um den Schub immer gleich dem gegebenen Wert zu halten, dadurch gekennzeichnet, daß die Einweg-Verriegelungseinrichtung (24) (59) eine stufenlose Verriegelungseinrichtung ist, welche die Wirkung hat, im wesentlichen jede Bewegung des ersten Endteils (23) in bezug auf die Stütze (30) in einer der Richtung des Schubes entgegengesetzten Richtung auszuschließen.

**2.** Vorrichtung wie in Anspruch 1 beansprucht, dadurch gekennzeichnet, daß die Verriegelungseinrichtung (24) (59) eine Reibungs-Verriegelungseinrichtung (24) (59) ist.

**3.** Vorrichtung wie in Anspruch 1 oder 2 beansprucht, dadurch gekennzeichnet, daß die Verriegelungseinrichtung (24) (59) einen in den ersten Endteil (23) integrierten Schieber (49), der entlang in einer gegebenen Richtung (58) auf den zweiten Endteil (22) zu entlang der Stütze (30) bewegbar ist, und ein EinwegVerriegelungselement (54) (60) aufweist, das in einer im wesentlichen festen Stellung an der Stütze (30) angebracht ist und das reibungsmäßig an den Schieber (49) angepaßt ist, wobei das Verriegelungselement (54) (60) so gestaltet ist, daß es für jede Verschiebung des Schiebers (49) von dem zweiten Endteil (22) weg eine Keilverriegelungswirkung auf den Schieber (49) ausübt.

**4.** Vorrichtung wie in einem der vorhergehenden Ansprüche beansprucht, dadurch gekennzeichnet, daß die Stütze (30) in den Schlitten (4) integriert und zusammen mit dem Schlitten (4) entlang der Führung (3) bewegbar ist.

**5.** Vorrichtung wie in Anspruch 3 oder 4 beansprucht, dadurch gekennzeichnet, daß das Verriegelungselement (54) eine im wesentlichen tellerförmige Federeinrichtung (53) aufweist, die in einer festen Stellung an der Stütze (30) befestigt ist und in einem Reibschluß mit dem Schieber (49) steht.

**6.** Vorrichtung wie in Anspruch 5 beansprucht, dadurch gekennzeichnet, daß der Schieber (49) eine Verspannfläche (57) aufweist, die im Kontakt mit der tellerförmigen Federeinrichtung (53) und im wesentlichen parallel zu der Richtung (58) bewegbar ist, wobei die tellerförmige Federeinrichtung (53) in bezug auf die Richtung (58) in Richtung auf die Verspannfläche (57) und in Richtung auf den zweiten Endteil (22) schräg steht.

**7.** Vorrichtung wie in einem der vorhergehenden Ansprüche von 3 bis 6 beansprucht, dadurch gekennzeichnet, daß der Schieber (49) eine Verspannfläche (57) aufweist, die im Kontakt mit dem Verriegelungselement (54) und im wesentlichen parallel zu der Richtung (58) bewegbar ist, und daß das Verriegelungselement (54) wenigstens ein biegsames Blatt (53) aufweist, das ein die Verspannfläche (57) berührendes freies Ende hat und das mit der Richtung (58) einen Winkel von über 90° bildet.

8. Vorrichtung wie in Anspruch 7 beansprucht, dadurch gekennzeichnet, daß das Verriegelungselement (54) ein Paar biegsame Blätter (53) aufweist, die schräg zueinander stehen und deren jeweilige freie Enden einander gegenüberliegen, und daß der Schieber (49) so angebracht ist, daß er mit Reibung zwischen den beiden freien Enden verschiebbar ist.

9. Vorrichtung wie in Anspruch 3 oder 4 beansprucht, dadurch gekennzeichnet, daß das Verriegelungselement (60) in bezug auf die Stütze (30) bewegbar ist und reibungsmäßig an den Schieber (49) angepaßt ist.

10. Vorrichtung wie in Anspruch 9 beansprucht, dadurch gekennzeichnet, daß das Verriegelungselement (60) eine Scheibeneinrichtung (61) aufweist, durch die der Schieber (49) gesteckt ist und die in bezug auf die Stütze (30) und den Schieber (49) in eine und aus einer Stellung bewegbar ist, in der der Schieber (49) durch Reibung in einer Richtung in bezug auf die Stütze (30) verriegelt ist.

11. Vorrichtung wie in Anspruch 10 beansprucht, dadurch gekennzeichnet, daß eine Schubeinrichtung (62) vorgesehen ist, um die Scheibeneinrichtung (61) in die Verriegelungsstellung zu drücken.

12. Vorrichtung wie in Anspruch 10 oder 11 beansprucht, dadurch gekennzeichnet, daß eine Schubeinrichtung (62) und eine Gegenwirkungseinrichtung (41) vorgesehen sind, um die Scheibeneinrichtung (61) in die Verriegelungsstellung zu drehen.

13. Vorrichtung wie in einem der Ansprüche 10, 11 oder 12 beansprucht, dadurch gekennzeichnet, daß in der Verriegelungsstellung die Scheibeneinrichtung (61) in bezug auf den Schieber (49) schräg gestellt ist.

14. Vorrichtung wie in Anspruch 13 beansprucht, dadurch gekennzeichnet, daß die Scheibeneinrichtung (61) ein Durchgangsloch (64) aufweist, das mit dem Schieber (49) in Eingriff steht, der eine Verspannfläche (57) aufweist, die durch das Loch (64) hindurch und im wesentlichen parallel zu der Richtung (58) bewegbar ist, und daß das Loch (64) einen größeren Querschnitt als der Schieber (49) hat und Randteile (65, 66) aufweist, die sich durch Reibung gegen die Verspannfläche (57) verkeilen, wenn sich die Scheibeneinrichtung (61) in der schrägen Stellung befindet.

15. Vorrichtung wie in einem der vorhergehenden Ansprüche von 10 bis 14 beansprucht, dadurch gekennzeichnet, daß die Scheibeneinrichtung (61) eine Scheibe (61) aufweist, durch die der Schieber (49) gesteckt ist.

## Revendications

1. Dispositif de réglage de vitre de véhicule (1) comprenant un guide (3); un coulisseau (4) se déplaçant le long du guide (3), raccordé à une vitre mobile (2), et susceptible de se déplacer avec la vitre (2) le long du guide (3); et un dispositif (5) destiné à entraîner le coulisseau (4); le dispositif d'entraînement (5) comprenant un câble (6) raccordé au coulisseau (4) et présentant une première (23) et une deuxième (22) partie extrémale; un support (30) susceptible de se déplacer avec ledit coulisseau (4) et destiné à porter les deux parties extrémales (22, 23); un moyen élastique (51) intercalé entre la première partie extrémale (23) et le support (30), en vue d'exercer sur la première partie extrémale (23) une poussée donnée dans la direction de la deuxième partie extrémale (22); une unité d'actionnement (8) raccordée au câble (6) en vue de déplacer ce dernier axialement le long d'un trajet annulaire (7); et des moyens de blocage unidirectionnel (24)(59) intercalés entre la première partie extrémale (23) et le support (30), et raccordés à la première partie extrémale (23) en vue de maintenir ladite poussée égale à tout moment à ladite valeur donnée, caractérisé par le fait que lesdits moyens de blocage unidirectionnel (24)(59) sont des moyens de blocage continu aptes à empêcher sensiblement tout déplacement de la première partie extrémale (23) par rapport au support (30) dans une direction opposée à la direction de ladite poussée.

2. Dispositif selon la revendication 1, caractérisé par le fait que lesdits moyens de blocage (24)(59) sont des moyens de blocage par friction (24)(59).

3. Dispositif selon la revendication 1 ou 2, caractérisé par le fait que lesdits moyens de blocage (24)(59) comprennent une pièce coulissante (49) monobloc avec la première partie extrémale (23) et susceptible de se déplacer le long du support (30) dans une direction donnée (58) vers la deuxième partie extrémale (22); et un élément de blocage unidirectionnel (54)(60) installé dans une position sensiblement fixe sur le support (30) et en contact de frottement avec ladite pièce coulissante (49); l'élément de blocage (54)(60) étant conçu pour exercer une action de blocage du type coinçage sur la pièce coulissante (49) pour chaque déplacement de la pièce coulissante (49) qui l'écarte de ladite deuxième partie extrémale (22).

4. Dispositif selon l'une quelconque des revendications précédentes, caractérisé par le fait que le support (30) est monobloc avec le coulisseau (4) et est susceptible de se déplacer avec le coulisseau (4) le long du guide (3).

5. Dispositif selon la revendication 3 ou 4, caractérisé par le fait que l'élément de blocage (54) comprend des moyens élastiques sensiblement cupuliformes (53) montés dans une position fixe sur le support (30) et en contact de frottement avec ladite pièce coulissante (49).

6. Dispositif selon la revendication 5, caractérisé par le fait que la pièce coulissante (49) présente une surface d'ancrage (57) susceptible de se déplacer au contact desdits moyens élastiques cupuliformes (53) et sensiblement parallèlement à ladite direction (58); les moyens élastiques cupuliformes (53) étant inclinés, par rapport à ladite direction (58), vers ladite surface d'ancrage (57) et vers ladite deuxième partie extrémale (22).

7. Dispositif selon l'une quelconque des revendications 3 à 6, caractérisé par le fait que la pièce coulissante (49) présente une surface d'ancrage (57) susceptible de se déplacer au contact dudit élément de blocage (54) et sensiblement parallèlement à ladite direction (58); l'élément de blocage (54) comprenant au moins une lame flexible (53) présentant une extrémité libre en contact avec ladite surface d'ancrage (57) et formant, avec ladite direction (58), un angle supérieur à 90°.

8. Dispositif selon la revendication 7, caractérisé par le fait que ledit élément de blocage (54) comprend une paire desdites lames flexibles (53) inclinées l'une vers l'autre et dont les extrémités libres respectives sont tournées l'une vers l'autre; la pièce coulissante (49) étant montée de manière à glisser avec frottement entre lesdites deux extrémités libres.

9. Dispositif selon la revendication 3 ou 4, caractérisé par le fait que l'élément de blocage (60) est susceptible de se déplacer par rapport au support (30), et est en contact de frottement avec ladite pièce coulissante (49).

10. Dispositif selon la revendication 9, caractérisé par le fait que l'élément de blocage (60) comprend des moyens formant plaque (61) traversés par ladite pièce coulissante (49) et mobiles, par rapport audit support (30) et à ladite pièce coulissante (49), vers et depuis une position dans laquelle la pièce coulissante (49) est bloquée dans un sens par friction par rapport au support (30).

11. Dispositif selon la revendication 10, caractérisé par le fait que des moyens de poussée (62) sont fournis pour repousser lesdits moyens formant plaque (61) vers ladite position bloquée.

12. Dispositif selon la revendication 10 ou 11, caractérisé par le fait que des moyens de poussée (62) et des moyens de réaction (41) sont prévus en vue d'exercer un couple rappelant lesdits moyens formant plaque (61) vers ladite position bloquée.

13. Dispositif selon la revendication 10, 11 ou 12, caractérisé par le fait que, dans ladite position bloquée, lesdits moyens formant plaque (61) sont placés obliquement par rapport à ladite pièce coulissante (49).

14. Dispositif selon la revendication 13, caractérisé par le fait que lesdits moyens formant plaque (61) présentent un trou traversant (64) dans lequel pénètre ladite pièce coulissante (49) et qui présente une surface d'ancrage (57) mobile dans ledit trou (64) et sensiblement parallèle à ladite direction (58), ledit trou (64) présentant une section plus grande que celle de ladite pièce coulissante (49), et des bords extrémaux (65, 66) qui se coincent par friction contre ladite surface d'ancrage (57) lorsque lesdits moyens formant plaque (61) sont dans ladite position oblique.

15. Dispositif selon l'une quelconque des revendications 10 à 14, caractérisé par le fait que lesdits moyens formant plaque (61) comprennent une rondelle (61) dans laquelle passe ladite pièce coulissante (49).

Fig.1

Fig.3

Fig.2